# EUROPEAN PATENT SPECIFICATION

(11) **EP 3 098 988 B1**
(45) Date of publication and mention of the grant of the patent: **09.01.2019**
(21) Application number: 15305814.4
(22) Date of filing: 28.05.2015
(51) Int. Cl.: H04J 14/02, H04B 10/2507, H04B 10/294, H04B 10/50, H04B 10/564

(54) **RELIABLE AND FLEXIBLE OPTICAL DEVICE FOR LOADING ASE SIGNAL BETWEEN MULTIPLEXED CHANNELS IN A TRANSMISSION LINE, AND ASSOCIATED APPARATUS**
ZUVERLÄSSIGE UND FLEXIBLE OPTISCHE VORRICHTUNG ZUM LADEN ASE SIGNAL ZWISCHEN MULTIPLEXERKANÄLEN IN EINER ÜBERTRAGUNGSLEITUNG UND ZUGEHÖRIGE VORRICHTUNG
DISPOSITIF OPTIQUE FIABLE ET SOUPLE POUR CHARGEMENT DE SIGNAUX ASE ENTRE DES CANAUX MULTIPLEXES DANS UNE LIGNE DE TRANSMISSION ET APPAREIL ASSOCIÉ

(43) Date of publication of application: 30.11.2016
(73) Proprietor: Alcatel Lucent, 91620 Nozay (FR)
(72) Inventor: Charlet, Gabriel, 91620 Nozay (FR); Courtois, Olivier, 91620 Nozay (FR)
(74) Representative: Nokia EPO representatives

(56) References cited:
- EP-A2- 0 790 718
- US-A1- 2004 257 643
- US-A1- 2012 087 658

## Description

### Field of the Invention

The present invention relates to apparatuses intended for transmitting optical signals into multiplexed channels, and more precisely to optical devices arranged for multiplexing channels into such apparatuses.

### Background

In some domains, such as undersea transmission, a loading of amplified spontaneous emission (or ASE) signal(s) is performed through dedicated channel(s) and between other channels, in order to ensure the right channel power within the undersea transmission line whatever the number of channels sent. Indeed, the optical amplifier output power operates in constant output power and thus delivers a constant output power whatever the channel count. This loading is carried out by an optical device comprising:
- first and second wavelength selective switches (or WSSs) each comprising input ports for receiving optical signals and an output port for providing switched optical signals,
- a first coupler comprising at least two input ports respectively coupled to the output ports of the first and second WSSs and an output connected to an optical amplifier, and
- an amplified spontaneous emission source (or ASE source) arranged for providing a chosen input port of the first WSS with an ASE signal.

The ASE loading can be done by using several (up to several tens) narrow band (∼ 0.4 nm) ASE sources or a wide band (> 30 nm) ASE source which has then to be spectrally sliced into channels to be combined with other channels by the first WSS. For instance, the ASE loading can be done by sending the wide band ASE signal to the last input port of the first WSS, which is configured to transmit it with a wavelength that is not used by channels dedicated to the optical signal transmission.

The two WSSs have slightly overlapping filtering functions and are used to combine channels to filter ASE from optical amplifiers (thanks to their filtering function) and to avoid filtering the channels (thanks to overlapping of their filtering functions).

The reliability of the optical device has to be extremely high as any failure on the ASE loading may prevent successful transmission of all the channels. Indeed, in absence of ASE loading, the channel power may be significantly too high and induces dramatic non linear penalties.

Moreover, a failure of the first WSS will not only prevent all the channels it manage to be transmitted, but also will remove the ASE loading power within the transmission line. So the (WDM - "Wavelength Dense Multiplexing") channels sent by the second WSS will be travelling within the transmission line at too high power, and therefore will be corrupted by non linearity and will not be recovered at the receiver end. Thus failure of the first WSS may "kill" all the channels.

So, the current ASE loading system is not flexible and may require manual connections and disconnections during the system life time, when the number of channel is increased.
The document US 2012/0087658 A1 discloses an optical transmission method and system using WSS to combine and/or separate bands of channel wavelengths.
The document US 2004/0257643 A1 discloses an optical fiber amplifier with error correction which can be used in communication systems.
The document EP 0790718 A2 discloses a method of identifying faults in wavelength-division multiplexing (WDM) optical networks by monitoring the power of one signal channel and the power of an ASE generated by an optical amplifier.

### Summary

So an object of this invention is to improve the situation, and notably to allow to dynamically change the loading power and/or the loading spectrum when the number of channels is progressively increased or when a failure occurs in a WSS or in the ASE source.

In an embodiment, an optical device comprises:
- first and second wavelength selective switches (or WSSs) each comprising input ports for receiving optical signals and an output port for providing switched optical signals into channels,
- a first coupler comprising at least two input ports respectively coupled to the output ports of the first and second WSSs and an output configured for being coupled to an optical amplifier,
- a first amplified spontaneous emission source arranged for providing an amplified spontaneous emission signal to an input port of the first wavelength selective switch,
- a second amplified spontaneous emission source arranged for providing an amplified spontaneous emission signal to an input port of the second wavelength selective switch,
- detecting means arranged for producing detection signals representative of power of signals respectively delivered by the output ports of the first and second wavelength selective switches, the first and second amplified spontaneous emission sources, and the first coupler output, and
- a control means arranged for controlling power of signals respectively delivered by the output ports of the first and second wavelength selective switches and the first and second amplified spontaneous emission sources, to maintain the power of signals delivered by the first coupler output approximately constant in case of failure of any of the first and second amplified spontaneous emission sources and of any of the first and second wavelength selective switches.

The optical device may include additional characteristics considered separately or combined, and notably:
- its control means may be arranged for triggering a predefined reconfiguration of a wavelength selective switch having a failure to allocate a predefined number of channels, previously allocated to optical signals, to the amplified spontaneous emission signal that is delivered by a corresponding one of the first and second amplified spontaneous emission sources;
- each one of the first and second amplified spontaneous emission sources may comprise a variable optical attenuator arranged for inducing an attenuation of the power of the respective amplified spontaneous emission signal that is controlled by the control means;
- in a variant each one of the first and second amplified spontaneous emission sources may comprise a laser diode arranged for outputting a variable power that is controlled by the control means;
- each one of the first and second amplified spontaneous emission sources may comprise a first generator arranged for delivering an amplified spontaneous emission signal on an output, a gain flattening filter comprising an input connected to the output of the first generator and an output for delivering an amplified spontaneous emission signal with flattened gain, and a second generator comprising an input connected to the output of the gain flattening filter and an output for delivering an amplified spontaneous emission signal with flattened gain;
- it may further comprise, between each one of the first and second amplified spontaneous emission sources and the corresponding one of the first and second wavelength selective switches, a protection means that is arranged for avoiding at least a part of the power delivered by a corresponding one of the first and second amplified spontaneous emission sources to reach the corresponding one of the first and second wavelength selective switches in response to a decision by the control means;
- it may further comprise a) third and fourth wavelength selective switches, b) auxiliary couplers arranged for feeding input ports of the first and third wavelength selective switches or the second and fourth wavelength selective switches with optical signals, c) a first auxiliary switch comprising two inputs coupled respectively to the output ports of the first and third wavelength selective switches and an output coupled to one of the input ports of the first coupler, and d) a second auxiliary switch comprising two inputs coupled respectively to the output ports of the second and fourth wavelength selective switches and an output coupled to another one of the input ports of the first coupler. In this case the control means is arranged for controlling configuration of the first and second auxiliary switches during a replacement of one of the first, second, third and fourth wavelength selective switches.

In another embodiment, an apparatus is intended for transmitting optical signals into multiplexed channels corresponding respectively to different wavelenghts, and comprises:
- an optical device such as the one above introduced,
- at least two groups of primary sources each arranged for delivering an optical signal at one of these wavelengths,
- primary couplers each comprising input ports respectively coupled to the primary sources of one of these groups and an output coupled to a corresponding one of the first and second wavelength selective switches of the optical device.

### Brief Description of the Figures

Some embodiments of an apparatus comprising an optical device in accordance with embodiments of the present invention are now described, by way of example only, and with reference to the accompanying drawings, in which:
- Figure 1 schematically and functionally illustrates an apparatus comprising a first example of embodiment of an optical device according to the invention;
- Figures 2A to 2C schematically illustrate in three diagrams respectively a first example of spectral combination of channels and ASE loading signal delivered on the main output port of the first WSS of the optical device, a first example of spectral combination of channels and ASE loading signal delivered on the main output port of the second WSS of the optical device, and the spectral combination of channels and ASE loading signals delivered at the output of the first coupler and originating from the first and second WSSs;
- Figures 3A and 3B schematically illustrate in two diagrams an example of spectral combination of channels and ASE loading signal at the output of the first coupler when the first WSS has a failure, respectively before and after intervention of the control means; and
- Figure 4 schematically and functionally illustrates an apparatus comprising a second example of embodiment of an optical device according to the invention.

### Description of Embodiments

Hereafter is notably disclosed an optical device (or multiplexing structure) 1 equipping an apparatus 2 intended for transmitting optical signals into multiplexed channels corresponding respectively to different wavelenghts.

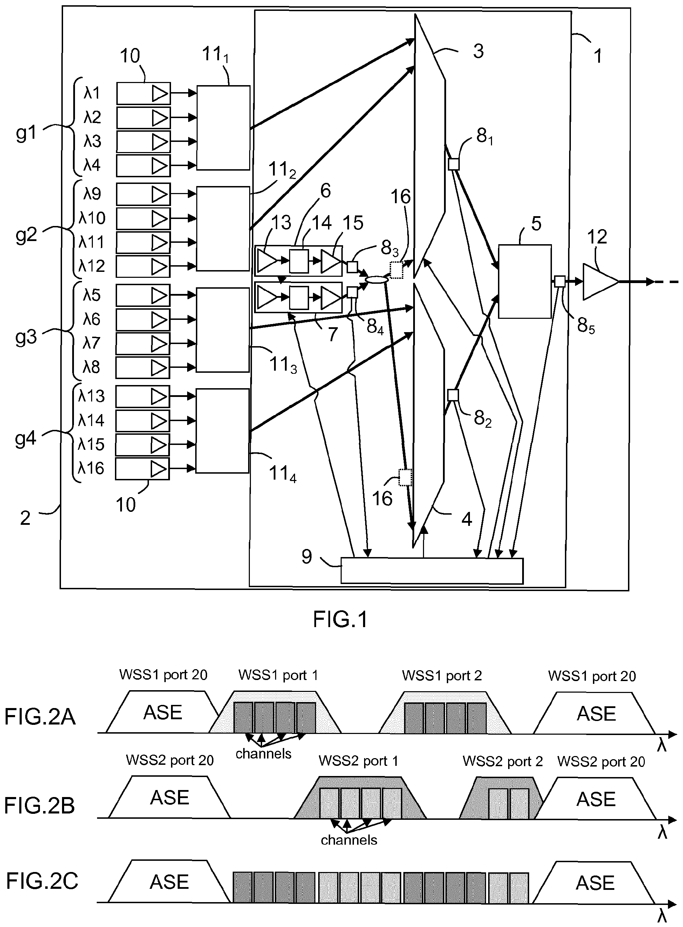

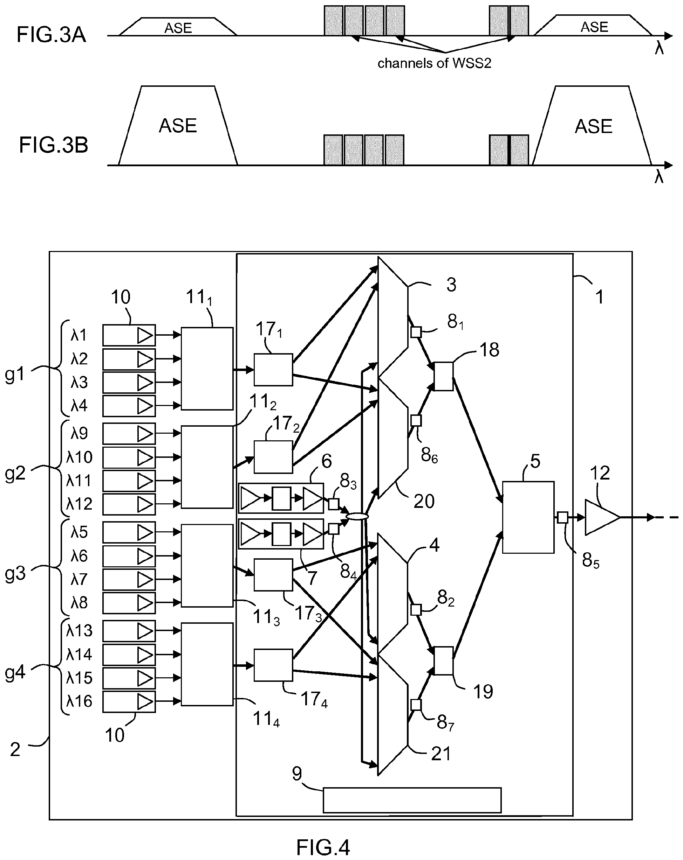

As illustrated in Figures 1 and 4, an optical device 1 according to the invention comprises at least first 3 and second 4 wavelength selective switches (or WSSs), a first coupler 5, a first amplified spontaneous emission (or ASE) source 6, a second amplified spontaneous emission (or ASE) source 7, detecting means 8ₖ (k = 1 to 5 in Figure 1, and k = 1 to 7 in Figure 4), and a control means 9.

The first wavelength selective switch (or WSS) 3, also referenced WSS1 in Figures 2 and 3, comprises input ports for receiving optical signals and an output port for providing switched optical signals into chosen channels (according to a chosen configuration).

The second wavelength selective switch (or WSS) 4, also referenced WSS2 in Figures 2 and 3, comprises input ports for receiving optical signals and an output port for providing switched optical signals into chosen channels (according to a chosen configuration).

The first 3 and second 4 WSSs have slightly overlapping filtering functions and are used to combine channels and filtered ASE from optical amplifiers (thanks to their filtering function) and to avoid filtering the channels (thanks to overlapping of their filtering functions).

For instance, each one of the first 3 and second 4 WSSs may comprise twenty input ports.

The optical signals received by the WSS input ports are produced by primary sources 10 of the apparatus 2, which are gathered in at least two groups gⱼ. Each primary source 10 is arranged for delivering an optical signal at a chosen wavelength. For this purpose, each primary source 10 may comprise a laser diode providing photons at a chosen wavelength, for instance. This primary source 10 may contain also an optical modulator to encode data onto the light.

In the non-limiting examples illustrated in Figures 1 and 4 the apparatus 2 comprises four groups gⱼ (j = 1 to 4) that each comprise four primary sources 10. The first g₁ and second g₂ groups are dedicated to the first WSS 3, and the third g₃ and fourth g₄ groups are dedicated to the second WSS 4. But the apparatus 2 may comprise any number of groups gⱼ, as soon as this number is at least equal to one, and each group gⱼ may comprise any number of primary sources 10, as soon as this number is at least equal to one. For instance, the number of primary sources 10 can be as low as one (notably at the beginning of life of the apparatus 2), and may increase to at least one hundred, for instance. Moreover the number of primary sources 10 may vary from one group to another group.

The apparatus 2 also comprises primary couplers 11ⱼ each comprising input ports respectively coupled to the primary sources 10 of one of the groups gⱼ and an output coupled to a corresponding one of the first 3 and second 4 WSSs. So, in the non-limiting examples illustrated in Figures 1 and 4 the apparatus 2 comprises four primary couplers 11ⱼ (j = 1 to 4), each comprising four input ports coupled to the same output. For instance, the output of the first primary coupler 11₁ is coupled to the first input port of the first WSS 3, the output of the second primary coupler 11₂ is coupled to the second input port of the first WSS 3, the output of the third primary coupler 11₃ is coupled to the first input port of the second WSS 4, the output of the fourth primary coupler 11₄ is coupled to the second input port of the second WSS 4.

The first coupler 5 comprises at least two input ports, respectively coupled to the output ports of the first 3 and second 4 WSSs, and an output, configured for being coupled to an optical amplifier 12. This optical amplifier 12 may belong either to the optical device 1 or to the apparatus 2. It may be an erbium doped fiber amplifier (or EDFA), for instance. The output of this optical amplifier 12 is connected to a transmission line, such as an optical fiber.

The first amplified spontaneous emission (or ASE) source 6 is arranged for providing an amplified spontaneous emission signal to a chosen input port of the first WSS 3.

The second amplified spontaneous emission (or ASE) source 7 is arranged for providing also an amplified spontaneous emission signal to a chosen input port of the second WSS 4.

For instance, and as illustrated in the non-limiting examples of Figures 1 and 4, each one of the first 6 and second 7 ASE sources may comprise a first generator 13, a gain flattening filter 14 and a second generator 15.

The first generator 13 is arranged for delivering an ASE signal on an output. For instance, it may comprise a laser diode providing photons. For instance, the first generator 13 may contain a 980 nm or 1480 nm laser diode which may be coupled to an erbium doped fiber which will generate photons in the 1530 nm - 1570 nm region.

The gain flattening filter 14 comprises an input connected to the output of the first generator 13 and an output for delivering an ASE signal with flattened gain. ASE noise from erbium doped fiber is not naturally spectrally flat. So, a gain flattening filter 14 is used to flatten the ASE spectrum. The ASE spectrum should be flat at the output of the ASE source.

The second generator 15 comprises an input connected to the output of the gain flattening filter 14 and an output for delivering an ASE signal with flattened gain. For instance, it may comprise a laser diode providing photons. For instance, the second generator 15 may contain a 980 nm or 1480 nm laser diode for optical pumping of an erbium doped fiber which will generate photons in the 1530 nm - 1570 nm region.

The detecting means 8ₖ are arranged for producing detection signals representative of power of signals that are respectively delivered by the output ports of the first 3 and second 4 WSSs, the first 6 and second 7 ASE sources, and the output of the first coupler 5.

For instance, each detecting means 8ₖ may comprise a photodiode arranged for delivering a current that is representative of the power of a signal delivered by the associated output. Such a photodiode is used for monitoring power and detecting potential failure.

The control means 9 is arranged for controlling power of signals respectively delivered by the output ports of the first 3 and second 4 WSSs and the first 6 and second 7 ASE sources, to maintain the power of signals delivered by the first coupler output approximately constant in case of failure of any of the first 6 and second 7 ASE sources and of any of the first 3 and second 4 WSSs. This allows also to prevent corruption from optical non linearities.

To this effect, the control means 9 is coupled at least to each one of the detecting means 8ₖ, to receive the detection signals they respectively delivered, and to the first 6 and second 7 ASE sources, to provide them with commands or instructions representative of the power of the ASE loading signal they must deliver on their respective outputs.

The control means 9 are preferably made of a combination of hardware and software modules, by means of FPGA or ASIC for instance. It could be also a microcontroller or a central processing unit (or CPU).

Thanks to the invention, if a failure occurs in one of the WSSs 3 and 4 or in one of the ASE sources 6 and 7, this will not prevent transmission of all channels in the transmission line for the reasons explained hereafter with reference to Figures 2 and 3.

When there is no failure in the optical device 1, the control means 9 does not have to intervene. Such a situation is schematically illustrated in the three diagrams of Figures 2A to 2C.

More precisely, the diagram of Figure 2A illustrates a first example of spectral combination of channels and ASE loading signal delivered on the output port of the first WSS 3 (here the optical signals have been received on the first and second input ports of the first WSS 3 and originate from the first g₁ and second g₂ groups of primary sources 10, and the ASE loading signal has been received on the twenthieth input port of the first WSS 3 and originates from the first ASE source 6).

The diagram of Figure 2B illustrates a first example of spectral combination of channels and ASE loading signal at the output of the second WSS 6 (here the optical signals have been received on the first and second input ports of the second WSS 4 and originate from the third g₃ and fourth g₄ groups of primary sources 10, and the ASE loading signal has been received on the twenthieth input port of the second WSS 4 and originates from the second ASE source 7). In this example the ASE loading signal has been received on the twenthieth input port of the second WSS 4, but it could be received on any port, and preferably on the port having the best extinction ratio.

The diagram of Figure 2C illustrates the spectral combination of channels and ASE loading signals delivered by the output of the first coupler 5 and originating from the first 3 and second 4 WSSs and defined in the diagrams of Figures 2A and 2B.

When a failure occurs in one of the WSSs 3 and 4 or in one of the ASE sources 6 and 7, the control means 9 is informed of this situation by a variation in at least one detection signal delivered by the detection means 8ₖ. So the control means 9 immediately intervenes. Its response time must be sufficiently short (typically tens of milliseconds) to minimize the impact of the detected failure. In the same way, the output power of each ASE source 6 and 7 must be varied very fast. To this effect each one of the first 6 and second 7 ASE sources may comprise a variable optical attenuator (or VOA) that is arranged for inducing an attenuation of the power of the respective ASE loading signal that is controlled by the control means 9. The VOA response time can be below 1 µs, notably when it is a silicon photonic VOA. Alternatively, each one of the first 6 and second 7 ASE sources may comprise a laser diode that is arranged for outputting a variable power that is controlled by the control means 9. In this case the response time can be below 1ms.

If the first WSS 3 has a failure (and therefore does not deliver any power on its output port), half channels of the apparatus 2 are lost as well as the ASE loading signal originating from the first ASE source 6. So, the output power of both the first 6 and second 7 ASE sources has to be increased to compensate for loss of channels and ASE power and therefore keep approximately constant the input power in the final optical amplifier 12. The power must be also increased in the first ASE source 6, because the powers of the first 6 and second 7 ASE sources are combined by a « 3dB coupler » which sends them to the two WSS. By increasing power by 6, the power sent is increased by 4 (through the 3dB coupler). For instance, the ASE output power has to be increased from x mW to 3x mW. But it will depend on the power ratio between ASE and signal.

Such a situation is schematically illustrated in the two diagrams of Figures 3A and 3B. The diagram of Figure 3A illustrates the spectral combination of channels and ASE loading signals delivered by the output of the first coupler 5 and originating from the second WSS 4 and defined in the diagram of Figure 2B, before the action of the control means 9. The diagram of Figure 3B illustrates the spectral combination of channels and ASE loading signals delivered by the output of the first coupler 5 and originating from the second WSS 4 and defined in the diagram of Figure 2B, after the control means 9 has ordered to the first 6 and second 7 ASE sources to triple their respective ASE output power.

If the first ASE source 6 has a failure (and therefore does not deliver any power on its output), the output power of the second ASE source 7 has to be doubled to keep constant the total power of the ASE loading signal in the transmission line.

When channel loading become large (typically > 50% of the total capacity of the transmission line (i.e. 50% of the spectrum is occupied by channels and 50% by ASE), the power degradation induced by the failure of a WSS 3 or 4 starts to be very difficult to compensate because spectrum available for ASE loading becomes reduced. So, in case of failure of the first WSS 3, ASE loading power cannot be inserted in the transmission line when all spectrum part are used for the optical signal channels. In this case, the channel power originating from the second WSS 4 will go through the transmission line with 3dB too high power. Such a 3dB power increase may be at the limit of what is acceptable in the transmission line. In order to reduce the channel power to the nominal power, the second WSS 4 has to be reconfigured to allow loading power in spectrum part nominally allocated for channel in the first WSS 3. In order to reduce this reconfiguration time, this recovery configuration has to be stored in memory in advance.

So, the control means 9 must be preferably arranged for triggering a predefined reconfiguration of a WSS 3 or 4 having a failure to allocate a predefined number of channels, previously allocated to optical signals (in channels), to the ASE loading signal delivered by a corresponding one of the first 6 and second 7 ASE sources.

In an advantageous embodiment the optical device 1 may be arranged in order to allow replacement of a faulty component (ASE source or WSS) without traffic interruption, and notably without reducing the ASE loading power. As the ASE loading power may be greater than 20dBm, a specific arrangement has to be implemented, for instance to avoid connector burning. To this effect, and as illustrated in the non-limiting example of Figure 1, the optical device 1 may comprise, between each one of its first 6 and second 7 ASE sources and the corresponding one of its first 3 and second 4 WSSs, a protection means 16 arranged for avoiding at least a part of the power delivered by a corresponding one of the first 6 and second 7 ASE sources to reach the corresponding one of the first 3 and second 4 WSSs in response to a decision by the control means 9. For instance, each protection means 16 may comprise an optical switch or an attenuator.

A more complex arrangement of the optical device 2 may also be considered to protect the first 3 and second 4 WSSs. Indeed, and as illustrated in the non-limiting example of Figure 4, protection may be done by duplicating the first 3 and second 4 WSSs and by using auxiliary couplers 17ⱼ, associated respectively to the groups gⱼ of primary sources 10, before the WSSs, and auxiliary switches 18 and 19 after the WSSs.

More precisely, in the non-limiting example illustrated in Figure 4, the optical device 1 further comprises third 20 and fourth 21 WSSs, auxiliary couplers 17ⱼ, and first 18 and second 19 auxiliary switches.

The third WSS 20 is preferably identical to the first WSS 3 and is intended to be used when the first WSS 3 has a failure. So one of its input ports (for instance the last one) is coupled to the output of the first ASE source 6 to receive the ASE loading signal it delivers on its output.

The fourth WSS 21 is preferably identical to the second WSS 4 and is intended to be used when the second WSS 4 has a failure. So one of its input ports (for instance the last one) is coupled to the output of the second ASE source 7 to receive the ASE loading signal it delivers on its output.

Each auxiliary coupler 17ⱼ is associated to a group gⱼ and is arranged for feeding input ports of the first 3 and third 20 WSSs or of the second 4 and fourth 21 WSSs with optical signals. So, each auxiliary coupler 17ⱼ comprises one input port and two output ports. For instance, each auxiliary coupler 17ⱼ is a (1x2) 3dB coupler.

The first auxiliary switch 18 comprises two inputs coupled respectively to the output ports of the first 3 and third 4 WSSs and an output coupled to one of the input ports of the first coupler 5.

The second auxiliary switch 19 comprises two inputs coupled respectively to the output ports of the second 4 and fourth 21 WSSs and an output coupled to another one of the input ports of the first coupler 5.

In such an embodiment the control means 9 is arranged for controlling configuration of the first 6 and second 7 auxiliary switches during a replacement of one of the first 3, second 4, third 20 and fourth 21 WSSs.

The invention allows implementation of WSSs into transmitting apparatus, notably for submarine terminals, to remotely reconfigure the routing of the wavelengths within a communication network, to allow plug- and-play upgrade, to maximize design capacity, and to maximize traffic availability.

It should be appreciated by those skilled in the art that any block diagram herein represent conceptual views of illustrative circuitry embodying the principles of the invention.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Optical device (1) comprising a) first (3) and second (4) wavelength selective switches each comprising input ports for receiving optical signals and an output port for providing switched optical signals into channels, b) a first coupler (5) comprising at least two input ports respectively coupled to said output ports of the first (3) and second (4) wavelength selective switches and an output configured for being coupled to an optical amplifier (12), **characterized in that** it further comprises c) a first amplified spontaneous emission source (6) arranged for providing an amplified spontaneous emission signal to an input port of said first wavelength selective switch (3), d) a second amplified spontaneous emission source (7) arranged for providing an amplified spontaneous emission signal to an input port of said second wavelength selective switch (4), said first (6) and second (7) amplified spontaneous emission sources being coupled by a "3dB coupler" which sends their emission signals to said two wavelength selective switches' input ports, e) detecting means (8ₖ) arranged for producing detection signals representative of power of signals respectively delivered by said output ports of said first (3) and second (4) wavelength selective switches, said first (6) and second (7) amplified spontaneous emission sources, and said first coupler output, and f) a control means (9) arranged for controlling power of signals respectively delivered by said output ports of said first (3) and second (4) wavelength selective switches and said first (6) and second (7) amplified spontaneous emission sources, to maintain the power of signals delivered by said first coupler (5) output approximately constant in case of failure of any of the first (6) and second (7) amplified spontaneous emission sources and of any of the first (3) and second (4) wavelength selective switches.

2. Optical device (1) according to claim 1, wherein said control means (9) is arranged for triggering a predefined reconfiguration of a wavelength selective switch (3, 4) having a failure to allocate a predefined number of channels, previously allocated to optical signals, to said amplified spontaneous emission signal delivered by a corresponding one of said first (6) and second (7) amplified spontaneous emission sources.

3. Optical device (1) according to one of claims 1 and 2, wherein each one of said first (6) and second (7) amplified spontaneous emission sources comprises a variable optical attenuator arranged for inducing an attenuation of the power of the respective amplified spontaneous emission signal that is controlled by said control means (9).

4. Optical device (1) according to one of claims 1 and 2, wherein each one of said first (6) and second (7) amplified spontaneous emission sources comprises a laser diode arranged for outputting a variable power that is controlled by said control means (9).

5. Optical device (1) according to one of claims 1 to 4, wherein each one of said first (6) and second (7) amplified spontaneous emission sources comprises a first generator (13) arranged for delivering an amplified spontaneous emission signal on an output, a gain flattening filter (14) comprising an input connected to the output of said first generator (13) and an output for delivering an amplified spontaneous emission signal with flattened gain, and a second generator (15) comprising an input connected to the output of said gain flattening filter (14) and an output for delivering an amplified spontaneous emission signal with flattened gain.

6. Optical device (1) according to one of claims 1 to 5, wherein it further comprises, between each one of said first (6) and second (7) amplified spontaneous emission sources and the corresponding one of said first (3) and second (4) wavelength selective switches, a protection means (16) arranged for avoiding at least a part of the power delivered by a corresponding one of said first (6) and second (7) amplified spontaneous emission sources to reach the corresponding one of said first (3) and second (4) wavelength selective switches in response to a decision by said control means (9).

7. Optical device (1) according to one of claims 1 to 6, wherein it further comprises third (20) and fourth (21) wavelength selective switches, auxiliary couplers (17ⱼ) arranged for feeding input ports of said first (3) and third (20) wavelength selective switches or said second (4) and fourth (21) wavelength selective switches with optical signals, a first auxiliary switch (18) comprising two inputs coupled respectively to the output ports of said first (3) and third (4) wavelength selective switches and an output coupled to one of said input ports of said first coupler (5), and a second auxiliary switch (19) comprising two inputs coupled respectively to the output ports of said second (4) and fourth (21) wavelength selective switches and an output coupled to another one of said input ports of said first coupler (5), and said control means (9) being arranged for controlling configuration of said first (6) and second (7) auxiliary switches during a replacement of one of said first (3), second (4), third (20) and fourth (21) wavelength selective switches.

8. Apparatus (2) for transmitting optical signals into multiplexed channels corresponding respectively to different wavelenghts, wherein it comprises at least two groups of primary sources (10) each arranged for delivering an optical signal at one of said wavelengths, primary couplers (11ⱼ) each comprising input ports respectively coupled to said primary sources (10) of one of said groups **characterized in that** it further comprises an optical device (1) according to one of the preceding claims, which couples an output of said primary couplers (11ⱼ) to a corresponding one of said first (3) and second (4) wavelength selective switches of said optical device (1).

## Patentansprüche

1. Optische Vorrichtung (1), umfassend a) erste (3) und zweite (4) wellenlängenselektive Schalter, jeder umfassend Eingangsports zum Empfangen optischer Signale und einen Ausgangsport zum Bereitstellen geschalteter optischer Signale in Kanälen, b) einen ersten Koppler (5), umfassend mindestens zwei Eingangsports, die jeweils gekoppelt sind mit besagten Ausgangsports der ersten (3) und zweiten (4) wellenlängenselektiven Schalter, und einen Ausgang, der konfiguriert ist zum Koppeln mit einem optischen Verstärker (12), **dadurch gekennzeichnet, dass** sie weiterhin umfasst c) eine erste verstärkte spontane Emissionsquelle (6), die angeordnet ist zum Bereitstellen eines verstärkten spontanen Emissionssignals für einen Eingangsport besagten ersten wellenlängenselektiven Schalters (3), d) eine zweite verstärkte spontane Emissionsquelle (7), die angeordnet ist zum Bereitstellen eines verstärkten spontanen Emissionssignals für einen Eingangsport besagten zweiten wellenlängenselektiven Schalters (4), wobei besagte erste (6) und zweite (7) verstärkte spontane Emissionsquellen gekoppelt sind durch einen "3dB-Koppler", welcher deren Emissionssignale an die Eingangsports besagter zwei wellenlängenselektiver Schalter sendet, e) ein Erkennungsmittel (8ₖ), das angeordnet ist zum Erzeugen von Erkennungssignalen, die repräsentativ sind für die Leistung der Signale, die jeweils von besagten Ausgangsports besagter erster (3) und zweiter (4) wellenlängenselektiver Schalter, besagter erster (6) und zweiter (7) verstärkter spontaner Emissionsquellen und besagten ersten Kopplerausgangs übermittelt werden, und f) ein Steuermittel (9), das angeordnet ist zum Steuern der Leistung der Signale, die jeweils von besagten Ausgangsports besagter erster (3) und zweiter (4) wellenlängenselektiver Schalter und besagter erster (6) und zweiter (7) verstärkter spontaner Emissionsquellen übermittelt werden, zum näherungsweisen konstanten Aufrechterhalten der Leistung der Signale, die übermittelt werden von besagtem ersten Kopplerausgang (5) im Falle eines Fehlers einer beliebigen der ersten (6) und zweiten (7) verstärkten spontanen Emissionsquellen oder eines beliebigen der ersten (3) und zweiten (4) wellenlängenselektiven Schalter.

2. Optische Vorrichtung (1) nach Anspruch 1, wobei besagtes Steuermittel (9) angeordnet ist zum Auslösen einer vordefinierten Neukonfiguration eines wellenlängenselektiven Schalters (3, 4), der einen Fehler aufweist, zum Zuweisen einer vordefinierten Anzahl von Kanälen, die vorher optischen Signalen zugewiesen worden sind, zu besagtem verstärkten spontanen Emissionssignal, das übermittelt worden ist von einer entsprechenden besagter erster
(6) und zweiter (7) verstärkter spontaner Emissionsquellen.

3. Optische Vorrichtung (1) nach einem der Ansprüche 1 und 2, wobei jede besagter erster (6) und zweiter (7) verstärkter spontaner Emissionsquellen einen variablen optischen Dämpfer umfasst, der angeordnet ist zum Induzieren einer Dämpfung der Leistung des entsprechenden verstärkten spontanen Emissionssignals, das von besagtem Steuermittel (9) gesteuert wird.

4. Optische Vorrichtung (1) nach einem der Ansprüche 1 und 2, wobei jede besagter erster (6) und zweiter (7) verstärkter spontaner Emissionsquellen eine Laserdiode umfasst, die angeordnet ist zum Ausgeben einer variablen Leistung, die von besagtem Steuermittel (9) gesteuert wird.

5. Optische Vorrichtung (1) nach einem der Ansprüche 1 bis 4, wobei jede besagter erster (6) und zweiter (7) verstärkter spontaner Emissionsquellen einen ersten Generator (13) umfasst, der angeordnet ist zum Übermitteln eines verstärkten spontanen Emissionssignals auf einen Ausgang, einen Verstärkungsausgleichsfilter (14), der einen Eingang umfasst, welcher mit dem Ausgang besagten ersten Generators (13) verbunden ist, und einen Ausgang zum Übermitteln eines verstärkten spontanen Emissionssignals mit Verstärkungsausgleich, und einen zweiten Generator (15), der einen Eingang umfasst, welcher mit dem Ausgang besagten Verstärkungsausgleichsfilters (14) verbunden ist, und einen Ausgang zum Übermitteln eines verstärkten spontanen Emissionssignals mit Verstärkungsausgleich.

6. Optische Vorrichtung (1) nach einem der Ansprüche 1 bis 5, wobei sie weiterhin umfasst, zwischen jeder besagter erster (6) und zweiter (7) verstärkter spontaner Emissionsquellen und dem entsprechenden besagter erster (3) und zweiter (4) wellenlängenselektiver Schalter, ein Schutzmittel (16), das angeordnet ist zum Vermeiden, dass mindestens ein Teil der Leistung, die von einer entsprechenden besagter erster (6) und zweiter (7) verstärkter spontaner Emissionsquellen übermittelt wird, den entsprechenden besagter erster (3) und zweiter (4) wellenlängenselektiver Schalter erreicht als Antwort auf eine Entscheidung durch besagtes Steuermittel (9).

7. Optische Vorrichtung (1) nach einem der Ansprüche 1 bis 6, wobei sie weiterhin umfasst dritte (20) und vierte (21) wellenlängenselektive Schalter, Hilfskoppler (17ⱼ), die angeordnet sind zum Versorgen der Eingangsports besagter erster (3) und dritter (20) wellenlängenselektiver Schalter oder besagter zweiter (4) und vierter (21) wellenlängenselektiver Schalter mit optischen Signalen, einen ersten Hilfsschalter (18), umfassend zwei Eingänge, die jeweils gekoppelt sind mit den Ausgangsports besagter erster (3) und dritter (4) wellenlängenselektiver Schalter, und einen Ausgang, der gekoppelt ist mit einem besagter Eingangsports besagten ersten Kopplers (5), und einen zweiten Hilfsschalter (19), umfassend zwei Eingänge, die jeweils gekoppelt sind mit den Ausgangsports besagter zweiter (4) und vierter (21) wellenlängenselektiver Schalter, und einen Ausgang, der gekoppelt ist mit einem anderen besagter Eingangsports besagten ersten Kopplers (5), und wobei besagtes Steuermittel (9) angeordnet ist zum Steuern der Konfiguration besagter erster (6) und zweiter (7) Hilfsschalter während eines Austauschs eines besagter erster (3), zweiter (4), dritter (20) und vierter (21) wellenlängenselektiver Schalter.

8. Vorrichtung (2) zum Übertragen optischer Signale in Multiplex-Kanäle, die entsprechend unterschiedlichen Wellenlängen entsprechen, wobei sie umfasst mindestens zwei Gruppen primärer Quellen (10), jede angeordnet zum Übermitteln eines optischen Signals mit einer besagter Wellenlängen, primäre Koppler (11ⱼ), jeder umfassend Eingangsports, die jeweils mit besagten primären Quellen (10) einer besagter Gruppen verbunden sind, **dadurch gekennzeichnet, dass** sie weiterhin umfasst eine optische Vorrichtung (1) nach einem der vorhergehenden Ansprüche, die einen Ausgang besagter primärer Koppler (11ⱼ) mit einem entsprechenden besagter erster (3) und zweiter (4) wellenlängenselektiver Schalter besagter optischer Vorrichtung (1) koppelt.

## Revendications

1. Dispositif optique (1) comprenant a) un premier (3) et un deuxième (4) commutateurs sélectifs en longueur d'onde comprenant chacun des ports d'entrée pour recevoir des signaux optiques et un port de sortie pour fournir des signaux optiques commutés dans des canaux, b) un premier coupleur (5) comprenant au moins deux ports d'entrée respectivement couplés auxdits ports de sortie des premier (3) et deuxième (4) commutateurs sélectifs en longueur d'onde et une sortie configurée pour être couplée à un amplificateur optique (12), **caractérisé en ce qu'**il comprend en outre c) une première source d'émission spontanée amplifiée (6) conçue pour fournir un signal d'émission spontanée amplifiée à un port d'entrée dudit premier commutateur sélectif en longueur d'onde (3), d) une seconde source d'émission spontanée amplifiée (7) conçue pour fournir un signal d'émission spontanée amplifiée à un port d'entrée dudit second commutateur sélectif en longueur d'onde (4), lesdites première (6) et seconde (7) sources d'émission spontanée amplifiée étant couplées au moyen d'un « coupleur 3dB » qui envoie leurs signaux d'émission auxdits deux ports d'entrée des commutateurs sélectifs en longueur d'onde, e) un moyen de détection (8ₖ) conçu pour produire des signaux de détection représentatifs de la puissance de signaux délivrés respectivement par lesdits ports de sortie desdits premier (3) et deuxième (4) commutateurs sélectifs en longueur d'onde, desdites première (6) et seconde (7) sources d'émission spontanée amplifiée et de ladite première sortie de coupleur, et f) un moyen de régulation (9) conçu pour réguler la puissance de signaux respectivement délivrés par lesdits ports de sortie desdits premier (3) et deuxième (4) commutateurs sélectifs en longueur d'onde et desdites première (6) et seconde (7) sources d'émission spontanée amplifiée, pour maintenir la puissance de signaux délivrés par ladite sortie du premier coupleur (5) environ constante en cas d'échec de l'une quelconque des première (6) et seconde (7) sources d'émission spontanée amplifiée et de l'un quelconque des premier (3) et deuxième (4) commutateurs sélectifs en longueur d'onde.

2. Dispositif optique (1) selon la revendication 1, dans lequel ledit moyen de commande (9) est conçu pour déclencher une reconfiguration prédéfinie d'un commutateur sélectif en longueur d'onde (3, 4) échouant à attribuer un nombre prédéfini de canaux, précédemment attribués à des signaux optiques, audit signal d'émission spontanée amplifiée délivré par une source correspondante parmi lesdites première (6) et seconde (7) sources d'émission spontanée amplifiée.

3. Dispositif optique (1) selon l'une des revendications 1 et 2, dans lequel chacune desdites première (6) et seconde (7) sources d'émission spontanée amplifiée comprend un atténuateur optique variable conçu pour induire une atténuation de la puissance du signal d'émission spontanée amplifiée respectif qui est commandée par ledit moyen de commande (9).

4. Dispositif optique (1) selon l'une des revendications 1 et 2, dans lequel chacune desdites première (6) et seconde (7) sources d'émission spontanée amplifiée comprend une diode laser conçue pour délivrer en sortie une puissance variable qui est commandée par ledit moyen de commande (9).

5. Dispositif optique (1) selon l'une des revendications 1 à 4, dans lequel chacune desdites première (6) et seconde (7) sources d'émission spontanée amplifiée comprend un premier générateur (13) conçu pour délivrer un signal d'émission spontanée amplifiée sur une sortie, un filtre égaliseur de gain (14) comprenant une entrée connectée à la sortie dudit premier générateur (13) et une sortie pour délivrer un signal d'émission spontanée amplifiée avec un gain égalisé, et un second générateur (15) comprenant une entrée connectée à la sortie dudit filtre égaliseur de gain (14) et une sortie pour délivrer un signal d'émission spontanée amplifiée avec un gain égalisé.

6. Dispositif optique (1) selon l'une des revendications 1 à 5, comprenant en outre, entre chaque source parmi lesdites première (6) et seconde (7) sources d'émission spontanée amplifiée et le commutateur correspondant parmi lesdits premier (3) et deuxième (4) commutateurs sélectifs en longueur d'onde, un moyen de protection (16) conçu pour éviter au moins une partie de la puissance délivrée par une source correspondante parmi lesdites première (6) et seconde (7) sources d'émission spontanée amplifiée pour atteindre le commutateur correspondant parmi lesdits premier (3) et deuxième (4) commutateurs sélectifs en longueur d'onde en réponse à une décision dudit moyen de commande (9).

7. Dispositif optique (1) selon l'une des revendications 1 à 6, comprenant en outre un troisième (20) et un quatrième (21) commutateurs sélectifs en longueur d'onde, des coupleurs auxiliaires (17ⱼ) conçus pour alimenter des ports d'entrée desdits premier (3) et troisième commutateurs sélectifs en longueur d'onde (20) ou desdits deuxième (4) et quatrième (21) commutateurs sélectifs en longueur d'onde avec des signaux optiques, un premier commutateur auxiliaire (18) comprenant deux entrées couplées respectivement aux ports de sortie desdits premier (3) et troisième (4) commutateurs sélectifs en longueur d'onde et une sortie couplée à un desdits ports d'entrée dudit premier coupleur (5), et un second commutateur auxiliaire (19) comprenant deux entrées couplées respectivement aux ports de sortie desdits deuxième (4) et quatrième (21) commutateurs sélectifs en longueur d'onde et une sortie couplée à un autre desdits ports d'entrée dudit premier coupleur (5), et ledit moyen de commande (9) étant conçu pour commander la configuration desdits premier (6) et second (7) commutateurs auxiliaires durant un remplacement d'un desdits premier (3), second (4), troisième (20) et quatrième (21) commutateurs sélectifs en longueur d'onde.

8. Appareil (2) de transmission de signaux optiques dans des canaux multiplexés correspondant respectivement à différentes longueurs d'onde, comprenant au moins deux groupes de sources primaires (10), chacun étant conçu pour délivrer un signal optique à une desdites longueurs d'onde, des coupleurs primaires (11ⱼ) comprenant chacun des ports d'entrée respectivement couplés auxdites sources primaires (10) d'un desdits groupes, **caractérisé en ce qu'**il comprend en outre un dispositif optique (1) selon l'une des revendications précédentes, qui couple une sortie desdits coupleurs primaires (11ⱼ) à un commutateur correspondant parmi lesdits premier (3) et deuxième (4) commutateurs sélectifs en longueur d'onde dudit dispositif optique (1).
